# EUROPEAN PATENT APPLICATION

(11) **EP 1 193 111 A2**
(43) Date of publication of application: **03.04.2002**
(21) Application number: 01305549.6
(22) Date of filing: 26.06.2001
(51) Int. Cl.: B60N 2/28

(54) **Shoulder harness for child seat**

(30) Priority: 30.06.2000 AU PQ845100
(71) Applicant: Britax Child-Care Products Pty Ltd., Sunshine, Melbourne 3020 (AU)
(72) Inventor: Maciejczyk, Wieslaw, Sunshine 3020 , Melbourne 3020 (AU)
(74) Representative: Hollinghurst, Antony

(57) **Abstract**

A child harness and booster seat (10) has a tether strap (13) secured to said backrest portion (12) with a tether connector (16) for attachment to a remote anchor point on a vehicle. A child harness (22) for use with said booster seat has a harness connector (25) on said harness and an anchor point (20) on said backrest portion to which the harness connector attaches. The harness connector is a catch and the anchor point on the backrest portion is an eyelet or latching bar to which the catch attaches. The anchor point on the back rest portion may be on the rear surface of the back rest portion. The harness has shoulder straps (23) which at their ends remote from the harness connector have loops (31) through which in use pass a lap portion of a seat belt (30) and crutch straps (18) secured to the seat portion of the booster seat have a hook which engages with the lap portion of seat belt in use to form a crutch restraint for a child seated in the seat.

## Description

### FIELD OF INVENTION

This invention relates to securing a shoulder harness for a booster seat, and in particular to a securement point on a booster seat which also has a tether strap attachment.

### BACKGROUND OF THE INVENTION

Booster seats to assist restraining children in motor vehicles are well known. The seat raises the child in relation to the vehicle seat to allow the vehicle seat belts to be positioned correctly on the child for adequate and safe restraint.

It has become required practice for some booster seats to be positively tethered to the vehicle. In the case of booster seats that comprise both seat and back rest portions, this is normally achieved by a tether strap that extends from the back rest of the booster seat to an attachment point which is behind the vehicle seat on the parcel shelf area. This restrains forward movement of the booster seat and works in combination with the vehicle seat belts which are placed across the front of the child.

As an alternative to using the vehicle seat belts and a booster seat to restrain a child, it is also common to use a child harness. A harness normally comprises a pair of shoulder straps which attach to either an existing lap seat belt or has it's own lap and crutch straps which are connected using a bayonet style buckle. These harnesses are generally secured to the same attachment point as the existing lap seat belt behind the vehicle seat.

However, it is not normal or allowed practice to connect both the tether strap of a booster seat and harness to the same tether point. Accordingly, it has not been possible to make use of a child harness with a booster seat.

### BRIEF DESCRIPTION OF THE INVENTION

It is an object of this invention to overcome this problem and enable the use of a harness in combination with a booster seat.

In its broadest form, the invention provides a child harness and booster seat including;
a booster seat having a seat and backrest portion;
a tether strap secured to the backrest portion;
a tether connector on the tether strap for attachment to a remote anchor point;
a child harness for use with said booster seat;
a harness connector on said harness; and
an anchor point on the backrest portion to which the harness connector attaches.

Preferably the harness connector comprises a catch and the anchor point on the backrest portion comprises an eyelet or latching bar to which the catch attaches.

Thee anchor point on the back rest portion may be on the rear surface of the back rest portion.

There may be further included a length adjuster between the harness connector and harness.

There may be an adjustor locator for the length adjuster positioned on the rear surface of the back rest portion.

A strap or straps extending between the harness connector and harness may pass over the top of the back rest portion. Alternatively the strap or straps extending between the harness connector and harness may pass through an aperture or apertures in the backrest portion so that the harness can be positioned over a child located within the booster seat.

Preferably the tether strap attaches at each side of the backrest portion and passes through apertures at each side of the backrest portion.

The harness may have shoulder straps which at their ends remote from the harness connector have loops through which in use pass a lap portion of a seat belt.

Crutch straps may be secured into and extend from the seat portion of the booster seat and a hook on the crutch straps may engage with a lap portion of seat belt in use to form a crutch restraint for a child seated in the seat.

### BRIEF DESCRIPTION OF THE DRAWINGS

In order to fully understand the invention, a preferred embodiment will now be described. However, it will be realised that the scope of the invention is not to be restricted or confined to the features of this embodiment.

This embodiment is illustrated in the accompanying drawings in which;
Figure 1 shows a front perspective view of a booster seat according to the invention,
Figure 2 shows a part rear view of the backrest portion of the booster seat shown in Figure **1**,
Figure 3 shows a part rear perspective view of the backrest portion of the booster seat shown in Figure 1, and
Figure 4 is a cross sectional view of the backrest portion of the booster seat shown in Figures 2 and 3.

### DESCRIPTION OF PREFERRED EMBODIMENT

The booster seat 10 comprises a seat portion 11 and a backrest portion 12. A tether strap 13 is attached to the backrest portion 12. The backrest portion 12 has a pair of apertures 14 on either side of the backrest portion 12 through which the tether strap 13 locates. The tether strap 13 comprises a length of webbing which is placed through the apertures 14 and is joined by a tether strap length adjuster 15. A tether strap connector 16 is attached to the tether strap 13. This comprises a standard catch which attaches to a remote anchor point which is located on the vehicle behind the vehicle seat. The adjuster 15 allow the length of the tether strap 13 to be set to the required length so that the connector 16 can attach to the vehicle anchorage point.

The booster seat is designed to make use of a vehicle lap sash or lap seat belt 30. This secures across the child and holds both the child and the booster seat 10 in position. The booster seat has a recess 17 on each side that guides the lap portion of the vehicle seat belt 30 and holds it in the required position in relation to a child. Crutch straps 18 which are secured into and extend from the seat portion 11 of the booster seat 10 have a hook 19 which engages with the lap portion 30 of the seat belt to form a crutch restraint for a child seated in the seat.

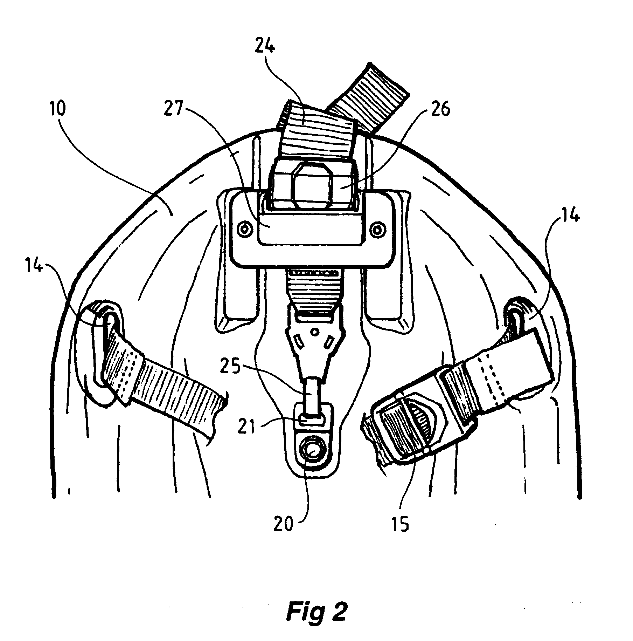

As seen in Figure 2, the booster seat 10 has an anchor point 20 attached to the rear of the backrest portion 12. The anchor point 20 has an eyelet 21. The harness 22 comprises a pair of shoulder straps 23 and a harness strap 24. The harness strap 24 has a connector 25 which comprises a hook shaped catch. The connector 25 attaches directly to the eyelet 21 of the anchor point 20.

The harness strap 24 has a length adjuster 26 which is fixed in its position with respect to the anchor point 20. An adjuster locator 27 has an angled surface 28 that allows rotation of the adjuster 26 into a position where it can be operated so that the harness strap 24 can freely move in any direction through the adjuster 26. The locator 27 keeps the adjuster 26 close to the backrest portion 12, thereby preventing it from being caught or jammed in a release position.

In this embodiment, the harness strap 24 drapes over the top of the back rest portion 12. However, similar to the apertures 14, a further aperture or apertures may be provided in the back rest portion 12 through which the harness strap 24 or the shoulder straps 23 may locate. This would have the advantage of applying load more directly to the tether strap 13 and reduce any risk of the top of the back rest portion 12 collapsing under load. It may be possible to have the shoulder straps 23 locate through the apertures 14 together with the tether strap 13.

The shoulder straps 23 at their ends remote from the harness strap 24 have loops 31 through which pass the lap portion of the seat belt 30.

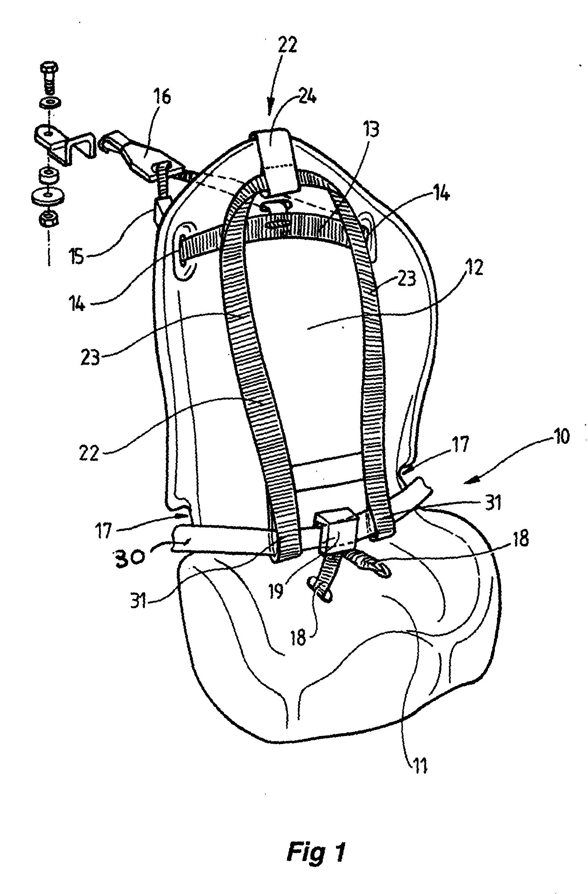

The assembly shown in Figures 1, 2 and 3 enables a booster seat 10 to be used with both a tether strap 13 and a harness 22. The harness 22 can be attached or detached as required. It also enables a harness 22, that might otherwise attach to the vehicle anchor point, to be attached to and used with a booster seat 10.

Throughout this specification various indications have been given as to the scope of this invention but the invention is not limited to any one of these but may reside in two or more of these combined together. The examples are given for illustration only and not for limitation.

Throughout this specification and the claims that follow unless the context requires otherwise, the words 'comprise' and 'include' and variations such as 'comprising' and 'including' will be understood to imply the inclusion of a stated integer or group of integers but not the exclusion of any other integer or group of integers.

## Claims

1. A child harness and booster seat including;
a booster seat having a seat and backrest portion;
a tether strap secured to the backrest portion;
a tether connector on the tether strap for attachment to a remote anchor point;
a child harness for use with said booster seat;
a harness connector on said harness; and
an anchor point on the backrest portion to which the harness connector attaches.

2. A child harness and booster seat as in Claim 1 wherein the harness connector comprises a catch and the anchor point on the backrest portion comprises an eyelet or latching bar to which the catch attaches.

3. A child harness and booster seat as in Claim 2 wherein the anchor point on the back rest portion is on the rear surface of the back rest portion.

4. A child harness and booster seat as in any one of Claims 1 to 3 further including a length adjuster between the harness connector and harness.

5. A child harness and booster seat as in Claim 4 further including an adjustor locator for the length adjuster, the adjuster locator being positioned on the rear surface of the back rest portion.

6. A child harness and booster seat as in any one of Claims 1 to 5 wherein a strap or straps extending between the harness connector and harness passes over the top of the back rest portion.

7. A child harness and booster seat as in any one of Claims 1 to 5 wherein a strap or straps extending between the harness connector and harness passes through an aperture or apertures in the backrest portion so that the harness can be positioned over a child located within the booster seat.

8. A child harness and booster seat as in any one preceding Claim wherein the tether strap attaches at each side of the backrest portion.

9. A child harness and booster seat as Claim 6 wherein the tether strap passes through apertures at each side of the backrest portion.

10. A child harness and booster seat as in any one preceding Claim wherein the harness has shoulder straps which at their ends remote from the harness connector have loops through which in use pass a lap portion of a seat belt.

11. A child harness and booster seat as in any one preceding Claim wherein crutch straps are secured into and extend from the seat portion of the booster seat and a hook on the crutch straps engages with a lap portion of seat belt in use to form a crutch restraint for a child seated in the seat.
